(19) Europäisches Patentamt
European Patent Office
Office européen des brevets

(11) **EP 4 261 216 A1**

(12) **EUROPEAN PATENT APPLICATION**
published in accordance with Art. 153(4) EPC

(43) Date of publication:
**18.10.2023 Bulletin 2023/42**

(21) Application number: **22909854.6**

(22) Date of filing: **15.12.2022**

(51) International Patent Classification (IPC):
***C07F 15/00*** *(2006.01)*

(86) International application number:
**PCT/CN2022/139184**

(87) International publication number:
**WO 2023/116540 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 CN 202111584527**

(71) Applicant: **Central South University**
**Changsha, Hunan 410083 (CN)**

(72) Inventors:
- **YI, Xiaoyi**
  **Changsha, Hunan 410083 (CN)**
- **CHEN, Guo**
  **Changsha, Hunan 410083 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **PYRIDINE PYRROLE RUTHENIUM COMPLEX, PREPARATION METHOD THEREFOR AND APPLICATION THEREOF AS CATALYST FOR PREPARING HYDRAZINE BY ELECTROCATALYTIC AMMONIA OXIDATION**

(57) The present invention discloses a pyridine pyrrole ruthenium coordination complex, a preparation method therefor and use thereof as a catalyst for electrocatalyzing ammonia oxidation to prepare hydrazine. The pyridine pyrrole ruthenium coordination complex takes high-activity metal ruthenium as a central metal ion and compounds containing pyridine pyrrole with electron withdrawing/donating capability as ligands, and thus has relatively high catalytic activity for ammonia oxidation. High conversion rate and high selectivity conversion of ammonia can be realized by applying the pyridine pyrrole ruthenium coordination complex to electrocatalytic ammonia oxidation in an organic solvent, with major products including $H_2$, $N_2$, $N_2H_4$, and the like.

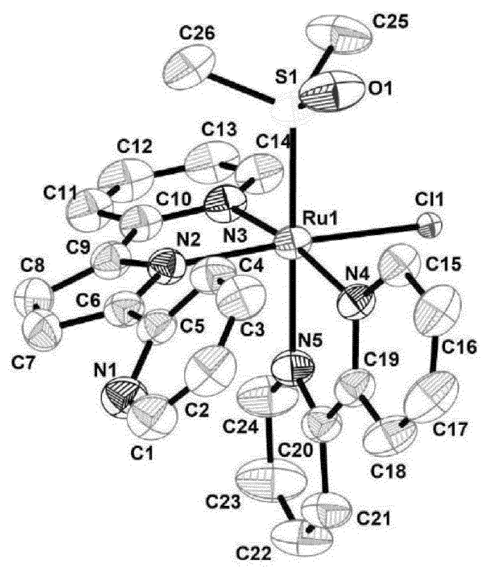

FIG. 1

EP 4 261 216 A1

## Description

### TECHNICAL FIELD

The present invention belongs to the technical field of catalysis and relates to a catalytic material, particularly to a pyridine pyrrole ruthenium coordination complex catalytic material, and also to a synthesis method therefor and use thereof as a catalyst for electrocatalyzing ammonia oxidation to prepare hydrazine.

### BACKGROUND

Hydrogen ($H_2$) is one of the most ideal substitutes for fossil fuels; however, the large-scale direct use of hydrogen energy is limited by its disadvantages of very low volumetric energy density, being highly inflammable and explosive, high storage and transportation costs, and poor safety, and the like. Therefore, it is imperative to develop hydrogen storage technology and hydrogen storage materials. Among many hydrogen storage materials, liquid small molecules are attracting attention as hydrogen energy carriers. Ammonia molecule ($NH_3$) has a hydrogen content as high as 17.6 wt% and thus has a big advantage as a hydrogen energy carrier, but its development and utilization progress slowly, mainly because it is mainly limited by the half-reaction of ammonia oxidation. Using small molecule metal coordination complexes as homogeneous catalysts provides a solution for catalytic oxidation of ammonia molecules under mild conditions. Hydrazine ($N_2H_4$) is widely applied in the fields of chemical industry, aerospace and energy as a strongly reducing, high-energy chemical reagent. In 1907, the industrial production of $N_2H_4$ was realized for the first time, and after more than 100 years of development, the current industrial production of $N_2H_4$ still relies on the traditional or improved Raschig method, which uses a strongly oxidizing agent to chemically oxidize $NH_3$ to prepare $N_2H_4$, and still faces many bottleneck problems.

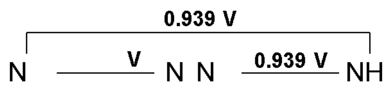

(A)

1) Low conversion rate and low product concentration in the reaction system. Since the dehydrogenation conversion of $NH_3$ to $N_2H_4$ is very thermodynamically unfavorable ($E^{\ominus}$ $N_2H_4/NH_3$ = 0.939 V) (as shown in (a)), the conversion of $NH_3$ to $N_2H_4$ in the conventional process is inefficient (< 10%). Therefore, the molar ratio of $NH_3/N_2H_4$ is usually increased (> 40/1) to improve the conversion rate. This leads to a low $N_2H_4$ product concentration (< 8%) in the reaction system and thus to a long, highly energy-consuming industrial process of subsequently extracting and concentrating hydrazine hydrate ($N_2H_4 \cdot H_2O$).

2) Environmental pollution and many by-products. The traditional Raschig method uses a large amount of chlorine-containing strong oxidants, causing environmental pollution. The improved Raschig method also produces a large amount of organic by-products.

3) High cost of preparing anhydrous $N_2H_4$. The added value of anhydrous $N_2H_4$ is much higher than that of hydrazine hydrate ($N_2H_4 \cdot H_2O$), as anhydrous $N_2H_4$ is 450,000 yuan/ton and 80% $N_2H_4 \cdot H_2O$ is 25,000 yuan/ton. Performing the Raschig method in an aqueous solution usually only affords up to 80% hydrazine hydrate ($N_2H_4 \cdot H_2O$), and costly dehydration processes are required to obtain anhydrous $N_2H_4$.

In a word, since the scientific challenge that the dehydrogenation conversion of $NH_3$ to $N_2H_4$ is very thermodynamically unfavorable have not been overcome for a long time, the problem that the existing process for preparing $N_2H_4$ is complicated, produces low yield, is highly energy-consuming, and so on, cannot be addressed, keeping the price of $N_2H_4$ high. Therefore, developing a high-efficiency new method for preparing anhydrous $N_2H_4$ is scientifically challenging and is also of great practical value.

In an organic solvent, the electrocatalytic $NH_3$ oxidation can realize the co-production of two products of high added value in one step: anhydrous $N_2H_4$ and $H_2$. The process has up to 100% atom economy and is cost-effective, and the industrial process is short; it is expected to become a disruptive and innovative technical approach to preparing anhydrous $N_2H_4$. Therefore, it is of great theoretical significance and practical value to develop a catalyst for electrocatalyzing ammonia oxidation to prepare hydrazine.

## SUMMARY

To solve the problems in the prior art, a first aim of the present invention is to provide a pyridine pyrrole metal ruthenium coordination complex having high catalytic activity for electrocatalytic ammonia oxidation.

A second aim of the present invention is to provide a simple and convenient method for preparing the pyridine pyrrole metal ruthenium coordination complex at low cost.

A third aim of the present invention is to provide use of the pyridine pyrrole ruthenium coordination complex as a catalyst for electrocatalyzing ammonia oxidation. The pyridine pyrrole ruthenium coordination complex has high catalytic activity for electrocatalytic ammonia oxidation, and can convert ammonia into $H_2$, $N_2$ and $N_2H_4$ with high efficiency and high selectivity.

To achieve the above aims, the present invention provides a pyridine pyrrole ruthenium coordination complex, which has any one of structures of formula 1 to formula 5:

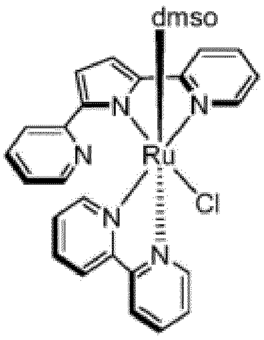

formula 1,

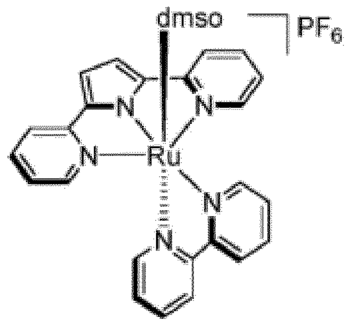

formula 2,

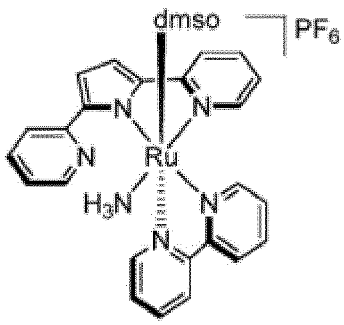

formula 3,

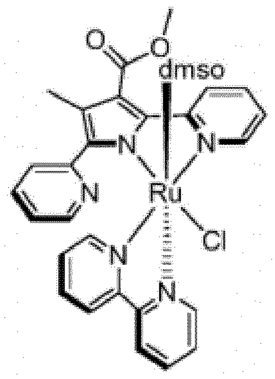

formula 4,

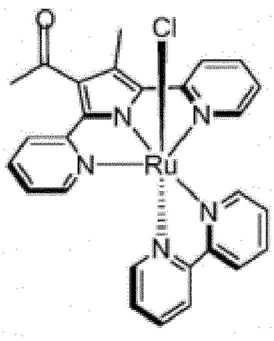

formula 5.

The pyridine pyrrole ruthenium coordination complex of the present invention takes metal ruthenium as a central metal ion, and pyridine pyrrole compounds as ligands. The metal ruthenium is a high-period transition metal, having various oxidation states (the valence ranges from -2 to +8) and showing high reaction activity. The pyridine pyrrole ligands have electron withdrawing/donating capability and can effectively reduce the potential of ammonia oxidation. Meanwhile, the internal hydrogen bond formed by a pyridine group of the pyridine pyrrole ligands and an ammonia

molecule can accelerate the deprotonation process in ammonia oxidation, so that the whole pyridine pyrrole ruthenium coordination complex has high catalytic activity and high selectivity for ammonia oxidation.

The present invention also provides a method for synthesizing the pyridine pyrrole ruthenium coordination complex, which comprises the following steps:

1) dissolving 2,5-dipyridylpyrrole, 2,5-dipyridyl-3-methyl-4-acetylpyrrole or 2,5-dipyridyl-3-carboxymethyl-4-methylpyrrole, cis-dichlorotetrakis(dimethyl sulfoxide)ruthenium, bipyridine and a basic compound in an organic solvent, and heating the resulting solution at reflux for reaction to obtain the pyridine pyrrole ruthenium coordination complex having a structure of formula 1, formula 4 or formula 5;
2) dissolving the pyridine pyrrole ruthenium coordination complex having a structure of formula 1 in a solvent, firstly heating the resulting solution at reflux for reaction, and then adding saturated ammonium hexafluorophosphate for ion exchange to obtain the pyridine pyrrole ruthenium coordination complex having a structure of formula 2; and
3) dissolving the pyridine pyrrole ruthenium coordination complex having a structure of formula 2 in a solvent, and then introducing an ammonia-containing gas for reaction to obtain the pyridine pyrrole ruthenium coordination complex having a structure of formula 3.

As a preferred embodiment, a molar ratio of 2,5-dipyridylpyrrole, 2,5-dipyridyl-3-methyl-4-acetylpyrrole or 2,5-dipyridyl-3-carboxymethyl-4-methylpyrrole to cis-dichlorotetrakis(dimethyl sulfoxide)ruthenium is 1:2 to 2:1.

As a preferred embodiment, a molar ratio of cis-dichlorotetrakis(dimethyl sulfoxide)ruthenium to bipyridine is 1:3 to 3:1.

As a preferred embodiment, the basic compound is at least one of calcium hydride, sodium hydride and triethylamine. These basic compounds are mainly used to promote the deprotonation reaction of 2,5-dipyridylpyrrole, 2,5-dipyridyl-3-methyl-4-acetylpyrrole or 2,5-dipyridyl-3-carboxymethyl-4-methylpyrrole. The basic compounds and the pyridine pyrrole ligands are used in a ratio of (1-8):1.

As a preferred embodiment, basic compounds that promote deprotonation reaction can be used, for example: sodium, sodium bicarbonate, sodium carbonate, sodium methoxide, and sodium hydroxide.

As a preferred embodiment, in step (1), the reaction is performed at a temperature of 50-115 °C for a period of 8-12 h.

As a preferred embodiment, in step (1), the organic solvent is dichloromethane, trichloromethane, acetonitrile, methanol, tetrahydrofuran, benzene or toluene. As a preferred embodiment, in step (2), the reflux reaction is performed at a temperature of 50-115 °C for a period of 2-6 d.

As a preferred embodiment, the ammonia-containing gas has an ammonia concentration of greater than 1%. The ammonia-containing gas may be pure ammonia gas or a combination of ammonia gas and nitrogen gas or an inert gas. The present invention also provides use of the pyridine pyrrole ruthenium coordination complex as a catalyst for electrocatalyzing ammonia oxidation to prepare $N_2H_4$ and simultaneously co-produce $H_2$.

The method for preparing the pyridine pyrrole ruthenium coordination complex provided by the present invention is specifically as follows:

(1) Any one of 2,5-dipyridylpyrrole, 2,5-dipyridyl-3-methyl-4-acetylpyrrole and 2,5-dipyridyl-3-carboxymethyl-4-methylpyrrole ligands, and dichlorotetrakis(dimethyl sulfoxide)ruthenium, bipyridine and a basic compound are dissolved in a solvent such as toluene, methanol or tetrahydrofuran under nitrogen atmosphere, and the resulting solution was magnetically stirred and heated at reflux for 8-12 h.
(2) After the reaction is completed, solvents such as toluene, diethyl ether or water are each added under nitrogen atmosphere to wash the mixture three times. Subsequently, the resulting solid is dissolved in dichloromethane, and anhydrous sodium sulfate is added to remove water from the solution. The solvent is removed from the filtrate to obtain a red solid, which is the ruthenium coordination complex having a structure of formula 1, formula 4 or formula 5.
(3) The pyridine pyrrole ruthenium coordination complex having a structure of formula 1 is dissolved in a solvent such as toluene, methanol or tetrahydrofuran under nitrogen atmosphere, and the resulting solution is stirred, and heated at reflux for 2-6 d.
(4) A saturated aqueous ammonium hexafluorophosphate solution is added dropwise to the above solution. After 2 h of stirring, the reaction mixture is filtered and dried by rotary evaporation to obtain a yellow solid, which is the pyridine pyrrole ruthenium coordination complex having a structure of formula 2.
(5) The pyridine pyrrole ruthenium coordination complex having a structure of formula 2 is dissolved in a solvent such as trichloromethane and dichloromethane or tetrahydrofuran and acetonitrile, and an ammonia gas with the concentration of 1-99.9% is then introduced for more than half an hour. The solution is left to stand for at least two days to obtain a red solid, which is the pyridine pyrrole ruthenium coordination complex having a structure of formula 3.

The pyridine pyrrole ruthenium coordination complexes having structures of formula 1 to formula 5 of the present

invention all have the catalytic property of electrocatalyzing ammonia oxidation to produce $H_2$, $N_2$ and $N_2H_4$. For example, electrolysis at a potential of no less than 0.5 V vs.$Cp_2Fe^{+/0}$ for 0-72 h under argon atmosphere produces 0-2500 $\mu$mol $H_2$, 0-25 $\mu$mol $N_2$ and 0-2500 $\mu$mol $N_2H_4$. The conversion rate of converting $NH_3$ into $N_2H_4$ may be up to 45%, and the solubility of $N_2H_4$ in the electrolysis solution reaches 0.032 mol/L, with high Faraday efficiency FE of 50-92%.

Compared with the prior art, the technical solutions of the present invention have the following beneficial technical effects:

1) The pyridine pyrrole ruthenium coordination complexes of the present invention take high-activity metal ruthenium as a central metal ion and pyridine pyrrole compounds with electron withdrawing/donating capability as ligands, and thus have relatively high catalytic activity for ammonia oxidation. The method for preparing the pyridine pyrrole ruthenium coordination complexes of the present invention is simple, convenient and cost-efficient, favoring large-scale production.

2) The pyridine pyrrole ruthenium coordination complexes of the present invention can realize a one-step method for preparing anhydrous $N_2H_4$ and simultaneously co-producing $H_2$ by electrocatalytic $NH_3$ oxidation with high selectivity ($n_{N2H4}/n_{N2max}$ 200), high catalytic efficiency ($TOF_{N2H4max}$ 400 $h^{-1}$) and high Faraday efficiency $FE_{max}$ 92%.

3) The pyridine pyrrole ruthenium coordination complexes of the present invention can realize a one-step method for preparing $N_2H_4$ in a pure organic solvent, favoring separation and purification.

4) To date, the synthesis of $N_2H_4$ still uses the traditional Raschig method and a non-catalytic oxidation approach. The approach uses a complicated process, produces low yield, is highly energy-consuming, and cause serious pollution. The pyridine pyrrole ruthenium coordination complexes of the present invention electrocatalyze the oxidation reaction at only room temperature and atmospheric pressure to synthesize two products of great value in one step, and the separation procedure is very simple. The present invention is completely capable of providing disruptive and innovative technology for the industrial production of anhydrous $N_2H_4$ in the future.

## BRIEF DESCRIPTION OF THE DRAWINGS

FIG. 1 is a single crystal diffraction pattern of coordination complex 1 [Ru($K^2$-N,N'-dpp)(bpy)(S-dmso)(Cl)];
FIG. 2 is a single crystal diffraction pattern of coordination complex 2 [Ru($K^3$-N,N'N"-dpp)(bpy)(S-dmso)] · $PF_6$;
FIG. 3 is a single crystal diffraction pattern of coordination complex 3 [Ru($K^2$-N,N'-dpp)(bpy)(S-dmso)($NH_3$)] · $PF_6$;
FIG. 4 is a single crystal diffraction pattern of coordination complex 4 [Ru($K^2$-N,N'-mdpc)(bpy)(S-dmso)(Cl)];
FIG. 5 is a single crystal diffraction pattern of coordination complex 5 [Ru($K^3$-N,N'N"-mdpe)(bpy)(Cl)];
FIG. 6 is a graph showing standard curves of gas chromatography of hydrogen and nitrogen;
FIG. 7 is a graph showing the gas composition during ammonia oxidation reactions electrocatalyzed by 0.01 mM coordination complexes 1, 2 and 3;
FIG. 8 is a graph showing the gas composition during an ammonia oxidation reaction electrocatalyzed by 0.01 mM coordination complex 3 at various reaction times;
FIG. 9 is a graph showing the gas composition during an ammonia oxidation reaction electrocatalyzed by 0.01 mM coordination complex 5 at various reaction times;
FIG. 10 is a graph showing an ultraviolet-visible spectrum absorption intensity-hydrazine concentration standard curve;
FIG. 11 is a graph showing ultraviolet-visible absorption spectra of the electrolysis solutions of coordination complexes 1, 2, and 3 after reacting with p-$C_9H_{11}NO$ for 1 h.

## DETAILED DESCRIPTION

To facilitate the understanding of the present invention, the present invention will be described comprehensively and in further detail with reference to preferred examples. However, the protection scope of the present invention is not limited to the following specific examples.

The substrate starting materials, solvents, etc. involved in the following examples are all commercially available products (analytically pure reagents). All the reagents used had underwent purification, drying and oxygen removal pretreatments. The involved synthesis and treatment processes used standard anhydrous and oxygen-free treatment techniques. $^1H$ NMR, $^{31}P$ NMR, and $^{19}F$ NMR used $CDCl_3$ as solvent and TMS as internal standard.

Multiplicity is defined as follows: s (singlet); d (doublet); t (triplet); q (quartet) and m (multiplet). Absorption intensity is defined as follows: s (strong absorption); m (moderate absorption); w (weak absorption).

Unless defined otherwise, all the terms used in the following have the same meaning as commonly understood by those skilled in the art. The terms used herein are for the purpose of describing specific examples only and not all of

them are within the scope of the present invention.

Example 1

1. Preparation of coordination complex 1 [Ru($K^2$-N,N'-dpp)(bpy)(S-dmso)(Cl)]

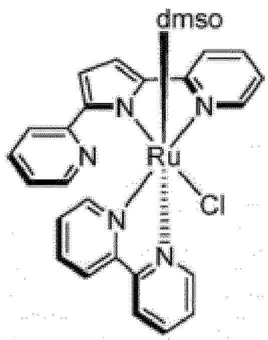

;

(1) cis-Dichlorotetrakis(dimethyl sulfoxide)ruthenium (1.088 g, 2.248 mmol), 2,5-dipyridylpyrrole (0.566 g, 2.248 mmol), bipyridine (0.351 g, 2.247 mmol) and triethylamine were dissolved in an organic solvent (50 mL) under nitrogen atmosphere. The solution was magnetically stirred and heated to 105 °C and was reacted for 10 h.

(2) After the reaction was completed, toluene, diethyl ether and water were each added under nitrogen atmosphere to wash the mixture three times. Subsequently, the resulting solid was dissolved in dichloromethane, and anhydrous sodium sulfate was added to remove water was removed from the solution. The solvent was removed from the filtrate to obtain a red solid.

(3) The resulting red solid was dissolved in dichloromethane by liquid phase diffusion, and diethyl ether and n-hexane were sequentially added. After the mixture was left to stand for 2 weeks, coordination complex 1 was obtained as a red acicular crystal.

Yield: 32%

$^1H$ NMR(400MHz,$CDCl_3$): δ10.171-10.186(d, 1H), δ9.399-9.413(d, 1H), δ8.125-8.137(d, 1H), δ7.914-7.934(d, 1H), δ7.644-7.731(m, 3H), δ7.573-7.607(t, 2H), δ7.472-7.510(m, 1H), δ7.099-7.169(m, 4H), δ6.963-6.995(m, 1H), δ6.829-6.838(d, 1H), δ6.676-6.710(m, 1H), δ6.299-6.309(d, 1H), δ3.165(s, 3H), δ2.401(s, 3H)ppm.

IR(KBr, $cm^{-1}$): 1589(s), 1522(s), 1433(s), 1323(s), 1279(w), 1152(w), 1074(s), 1014(s), 961(w), 919(w), 789(m), 766(s), 724(m), 686(m), 435(m).

2. Preparation of coordination complex 2 [Ru($K^3$-N,N'N"-dpp)(bpy)(S-dmso)] · $PF_6$

Target product 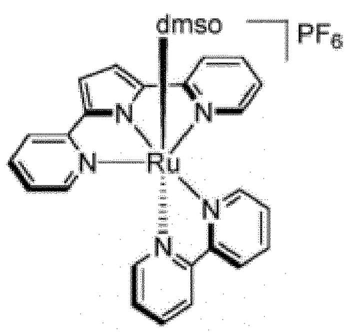 ;

(4) Coordination complex 1 was dissolved in an organic solvent under nitrogen atmosphere. The solution was stirred and heated to 60 °C, reacted for 4 days, and then concentrated to 3 mL by rotary evaporation.

(5) A saturated aqueous ammonium hexafluorophosphate solution was added dropwise to the above solution.

After 2 h of stirring, the reaction mixture was filtered and dried by rotary evaporation to obtain a yellow solid.

(6) The resulting red solid was dissolved in dichloromethane by liquid phase diffusion, and diethyl ether and n-hexane were sequentially added. After the mixture was left to stand for 2 weeks, coordination complex 2 was obtained as a red acicular crystal.

Yield: 93%.

$^1H$ NMR(400MHz, $CDCl_3$): δ10.315-10.301(d, 1H), δ8.583-8.563(d, 1H), δ8.442-8.422(d, 1H), δ8.177-8.138(t, 1H), δ7.924-7.884(t, 1H), δ7.763-7.730(t, 1H), δ7.550-7.511(m, 2H), δ7.418-7.399(d, 2H), δ7.328-7.315(d, 2H), δ7.231-7.197(t, 1H), δ6.909(s, 2H), δ6.823-6.809(d, 1H), δ6.748-6.715(m, 2H), δ2.582(s, 6H)ppm.

$^{31}P$ NMR(162MHz, $CDCl_3$): δ-135.60, δ-140.01, δ-144.40, δ-148.80, δ-153.20ppm.

$^{19}F$ NMR(380MHz, $CDCl_3$): δ-72.36, δ-74.25ppm.

IR(KBr, $cm^{-1}$): 1598(s), 1486(s), 1396(m), 1298(s), 1263(w), 1156(w), 1087(m), 1042(w), 1008(m), 840(s), 760(s), 557(s), 431(m).

Table 1. Crystal data of coordination complex 2

| Compound | Coordination complex 2 |
|---|---|
| Empirical formula | $C_{26}H_{24}F_6N_5OPRuS$ |
| Formula weight | 700.60 |
| Crystal system | monoclinic |
| Space group | $P2_1/n$ |
| *a*/Å | 9.52761(19) |
| *b*/Å | 26.2603(5) |
| *c*/Å | 12.0967(2) |
| *a*/° | |
| *b*/° | 101.4548(16) |
| g/° | |
| *V*/[Å$^3$] | 2966.28(10) |
| *Z* | 4 |
| $\rho_{calcd}$ [g cm$^{-3}$] | 1.569 |
| μ [mm$^{-1}$] | 0.719 |
| *F*(000) | 1408.0 |
| $R_{int}$ | 0.0384 |
| $^a$GooF | 1.024 |
| $^bR_1$, $^cwR_2$ [I>2σ (*I*)] | 0.0406/ 0.0898 |
| $R_1$, $wR_2$ [all data] | 0.0615/ 0.0968 |

$$^{a}GooF=[\Sigma w(|F_o|-|F_c|)^2/(N_{obs}-N_{param})]^{1/2}.$$

$$^{b}R_1=\Sigma||F_o|-|F_c||/\Sigma|F_o|.{}^{c}wR_2[(\Sigma w|F_o|-|F_c|)^2/\Sigma w^2|F_o|^2]^{1/2}.$$

Table 2. Some bond length and bond angle data of coordination complex **2**

| | | | |
|---|---|---|---|
| **Bond Distances(Å)** | | | |
| Ru(1)-N(1) | 2.1371(19) | Ru(1)-N(5) | 2.1002(19) |
| Ru(1)-N(2) | 1.9368(17) | Ru(1)-S(1) | 2.2310(6) |
| Ru(1)-N(3) | 2.1341(17) | S(1)-O(1) | 1.4823(17) |
| Ru(1)-N(4) | 2.1037(17) | | |
| **Bond Angles (°)** | | | |
| N(1)-Ru(1)-N(2) | 76.22(7) | N(3)-Ru(1)-N(5) | 84.61(7) |
| N(1)-Ru(1)-N(3) | 152.48(7) | N(4)-Ru(1)-N(5) | 77.58(7) |

(continued)

| Bond Angles (°) | | | |
|---|---|---|---|
| N(1)-Ru(1)-N(4) | 102.97(7) | S(1)-Ru(1)-N(1) | 91.80(5) |
| N(1)-Ru(1)-N(5) | 92.43(7) | S(1)-Ru(1)-N(2) | 92.53(6) |
| N(2)-Ru(1)-N(3) | 76.55(7) | S(1)-Ru(1)-N(3) | 93.28(5) |
| N(2)-Ru(1)-N(4) | 169.54(8) | S(1)-Ru(1)-N(4) | 97.93(6) |
| N(2)-Ru(1)-N(5) | 92.00(8) | S(1)-Ru(1)-N(5) | 174.42(5) |
| N(3)-Ru(1)-N(4) | 103.07(7) | O(1)-S(1)-Ru(1) | 118.20(8) |

3. Preparation of coordination complex 3 [Ru(K$^2$-N,N'-dpp)(bpy)(S-dmso)($NH_3$)]·$PF_6$

Target product 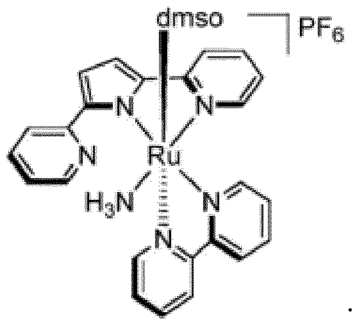 ;

(1) Coordination complex **2** (35 mg, 0.050 mmol) was dissolved in trichloromethane. Then 2% ammonia gas was introduced (nitrogen as carrier gas) for half an hour, and the solution was left to stand for 1 h. The process was repeated 3 times. The solution was left to stand for 2 weeks and finally concentrated at room temperature. Diethyl ether and n-hexane were sequentially added, and coordination complex **3** was obtained as a red lamellar crystal by liquid phase diffusion.

Yield: 98%.

$^1$H NMR(400MHz, $CDCl_3$): δ9.871-9.858(d, 1H), δ8.412-8.401(d, 1H), δ8.313-8.293(d, 1H), δ8.251-8.231(d, 1H), δ7.714-7.675(t, 1H), δ7.646-7.612(t, 1H), δ7.517-7.503(d, 1H), δ7.463-7.402(m, 2H), δ7.328-7.315(d, 2H), δ7.189-7.175(d, 1H), δ7.095-7.175(d, 1H), δ7.095-7.064(m, 1H), δ7.029-7.019(d, 1H), δ6.981-6.952(t, 1H), δ6.617-6.586(t, 1H), δ3.160(s, 3H), δ3.110(s, 3H), δ2.534(s, 3H)ppm.

$^{31}$P NMR(162MHz, $CDCl_3$): δ-135.92, δ-140.28, δ-144.64, δ-149.00, δ-153.36ppm.

$^{19}$F NMR(380MHz, $CDCl_3$): δ-72.02, δ-73.89ppm.

IR(KBr, cm$^{-1}$): 3371(w), 1604(m), 1529(m), 1454(w), 1421(m), 1325(m), 1161(w), 1080(m), 1018(m), 843(s), 764(m), 685(w), 557(m), 430(m).

4. Preparation of coordination complex **4** [Ru(K$^2$-N,N'-mdpc)(bpy)(S-dmso)(Cl)]

Target product

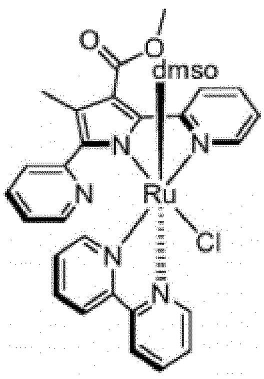

;

(1) Dichlorotetrakis(dimethyl sulfoxide)ruthenium (1.088 g, 2.248 mmol), 2,5-dipyridyl-3-carboxymethyl-4-methylpyrrole ligand (0.659 g, 2.248 mmol), bipyridine (0.351 g, 2.247 mmol) and triethylamine were dissolved in an organic solvent (50 mL) under nitrogen atmosphere. The solution was stirred and heated to 105 °C and was reacted for reaction for 9 h.
(2) After the reaction was completed, diethyl ether and water were each added under nitrogen atmosphere to wash the mixture three times. Subsequently, the resulting solid was dissolved in dichloromethane, and anhydrous sodium sulfate was added to remove water from the solution. The solvent was removed from the filtrate to obtain a red solid.
(3) The red solid was separated by column chromatography on a chromatographic silica gel column to obtain a red solid product.
(4) The resulting red solid was dissolved in dichloromethane by liquid phase diffusion, and diethyl ether and n-hexane were sequentially added. After the mixture was left to stand for 2 weeks, coordination complex **4** was obtained as a red acicular crystal.

Yield: 25%.

$^1H$ NMR(400MHz, $CDCl_3$): δ9.677-9.689(d, 1H), δ9.552-9.565(d, 1H), δ8.045-8.091(t, 2H), δ7.847-7.868(d, 2H), δ7.738-7.796(m, 2H), δ7.485-7.528(m, 1H), δ7.430-7.442(d, 1H), δ7.132-7.178(m, 2H), δ7.026-7.062(m, 1H), δ6.892-6.928(m, 1H), δ6.779-6.813(m, 1H), δ6.724(s, 1H), δ3.290(s, 3H), δ3.019(s, 3H)ppm, δ2.744(s, 3H)ppm, δ2.460(s, 3H)ppm.

IR(KBr, $cm^{-1}$): 3603(m), 2916(s), 2497(m), 1682(s), 1589(m), 1521(w), 1444(s), 1414(w), 1323(w), 1261(w), 1198(w), 1153(w), 1078(s), 1012(w), 766(s), 729(w), 679(w), 430(m).

5. Preparation of coordination complex 5 [Ru($K^3$-N,N'N"-mdpe)(bpy)(Cl)] Target product

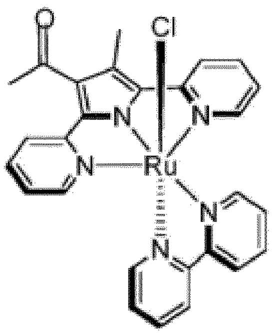

(1) cis-[$Ru(dmso)_4(Cl)_2$] (1.088 g, 2.248 mmol), 2,5-dipyridyl-3-methyl-4-acetylpyrrole (0.623 g, 2.248 mmol), bipyridine (0.351 g, 2.247 mmol) and a base were dissolved in an organic solvent (50 mL) under nitrogen atmosphere. The solution was stirred and heated to 100 °C and was reacted for 12 h.
(2) After the reaction was completed, toluene, diethyl ether and water were each added under nitrogen atmosphere to wash the mixture three times. Subsequently, the resulting solid was dissolved in dichloromethane, and anhydrous sodium sulfate was added to remove water from the solution. The solvent was removed from the filtrate to obtain a

red solid.

(3) The resulting red solid was dissolved in dichloromethane by liquid phase diffusion, and diethyl ether and n-hexane were sequentially added. After the mixture was left to stand for 2 weeks, coordination complex **5** was obtained as a red acicular crystal.

Yield: 30%.

$^1H$ NMR(400MHz, $CDCl_3$): δ10.443-10.457(d, 1H), δ8.906-8.927(d, 1H), δ8.159-8.179(d, 1H), δ7.913-7.932(d, 1H), δ7.787-7.826(t, 1H), δ7.709-7.722(d, 1H), δ7.612-7.645(t, 1H), δ7.454-7.505(t, 1H), δ7.249-7.351(m, 2H), δ7.087-7.110(t, 2H), δ6.847-6.886(m, 2H), δ6.406-6.475(m, 2H), δ2.794(s, 3H), δ2.603(s, 3H).

IR(KBr, $cm^{-1}$): 3095(w), 3059(m), 1631(m), 1589(s), 1460(s), 1417(m), 1354(w), 1340(w), 1242(w), 1136(s), 1020(w), 982(w), 945(w), 754(m), 619(w).

6. Gas chromatography experiments:

(1) Gas chromatography was used to determine the gas composition during the reactions, and the conditions are as follows: the potential is not less than 0.5 V vs $Cp_2Fe^{+/0}$, and the electrolyte is an organic solution containing 0-0.1 mM coordination complex **1, 2, 3, 4** or **5,** 0.1 M $[NBu_4][PF_6]$, and 0-2.5 M $NH_3$.

(2) At different time stages of electrolysis, 100 μL of upper gas was drawn off with a gastight syringe and injected into a gas chromatograph to obtain the gas composition and content in the electrolytic cell.

The results are as follows: after 24 h of electrolysis, 375.4 μmol $H_2$ and 7.4 μmol $N_2$ were produced with coordination complex **1,** 459.5 μmol $H_2$ and 6.32 μmol $N_2$ were produced with coordination complex **2,** and 1458.35 μmol $H_2$ and 10.55 μmol $N_2$ were produced with coordination complex **3.** After 48 h of electrolysis, 86.08 μmol $H_2$ and 5.85 μmol $N_2$ were produced with coordination complex **5.** The gas chromatography experiments reveals that the ratio of $H_2$ to $N_2$ in the system ranges from 10:1 to 200:1, which is much higher than the ratio of hydrogen to nitrogen in an ammonia molecule (3:1). During the electrolysis, the positive electrode products were all $NH_2NH_2$ in addition to $N_2$, and no $NO_2^-$, $NO_3^-$ and the like were produced.

7. Ultraviolet-visible spectroscopy experiments:

(1) To a 10 mL cuvette, 0.4 mL of the electrolysis solution, 0.5 mL of HCl (0.6 mol/L) solution and 0.5 mL of p-$C_9H_{11}NO$ in ethanol were added. The mixture was diluted with water to 10 mL and reacted for 1 h.

(2) 0.5 mL of the reaction mixture was diluted to 10 mL in a 10 mL cuvette. The absorption intensity at 455 nm was measured on an ultraviolet-visible spectrometer, and the $NH_2NH_2$ content in the electrolysis solution was obtained from the $NH_2NH_2$ concentration-455 nm absorbance standard curve through the measured intensity.

The results are as follows: after 24 h of electrolysis, 341.2 μmol, 423.0 μmol and 1380.04 μmol $NH_2NH_2$ were produced with coordination complexes **1, 2** and **3,** respectively.

The main method of the present invention for preparing coordination complexes **1, 2, 3, 4** and **5** and the characteristics of electrocatalytic ammonia oxidation are shown and described above.

It will be understood by those skilled in the art that the present invention is not limited to the examples described above. The examples described above and the descriptions in the specification are only intended to illustrate the principles and procedures of the present invention. Various changes and improvements may be made to the present invention without departing from the spirit and scope of the present invention, and these changes and improvements all fall within the protection scope of the present invention. The protection scope of the present invention is defined by the appended claims and equivalents thereof.

## Claims

**1.** A pyridine pyrrole ruthenium coordination complex, having any one of structures of formula 1 to formula 5:

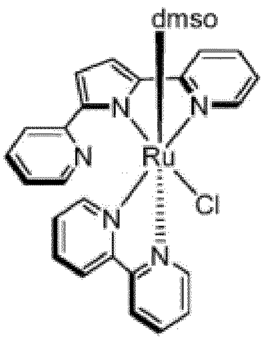

formula 1,

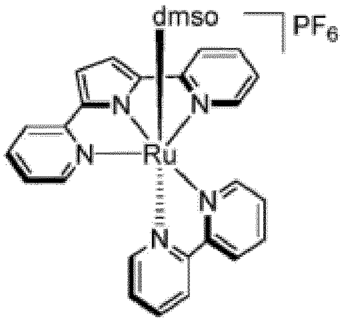

formula 2,

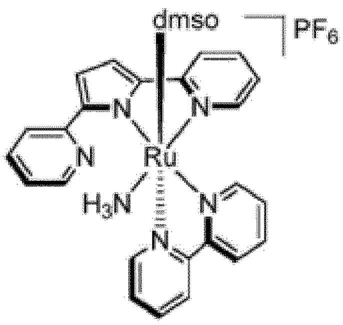

formula 3,

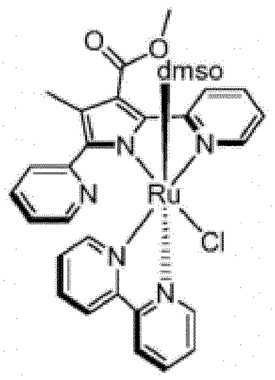

formula 4,

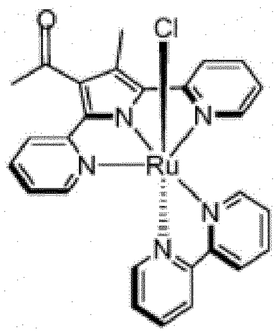

formula 5.

**2.** A method for synthesizing the pyridine pyrrole ruthenium coordination complex according to claim 1, comprising the following steps:

1) dissolving 2,5-dipyridylpyrrole, 2,5-dipyridyl-3-methyl-4-acetylpyrrole or 2,5-dipyridyl-3-carboxymethyl-4-methylpyrrole, cis-dichlorotetrakis(dimethyl sulfoxide)ruthenium, bipyridine and a basic compound in a solvent, and heating the resulting solution at reflux for reaction to obtain the pyridine pyrrole ruthenium coordination complex having a structure of formula 1, formula 4 or formula 5;
2) dissolving the pyridine pyrrole ruthenium coordination complex having a structure of formula 1 in a solvent, firstly heating the resulting solution at reflux for reaction, and then adding saturated ammonium hexafluorophosphate solution for ion exchange to obtain a pyridine pyrrole ruthenium coordination complex having a structure of formula 2; and
3) dissolving the pyridine pyrrole ruthenium coordination complex having a structure of formula 2 in a solvent, and then introducing an ammonia-containing gas for reaction to obtain the pyridine pyrrole ruthenium coordination complex having a structure of formula 3.

**3.** The method for synthesizing the pyridine pyrrole ruthenium coordination complex according to claim 2, wherein a molar ratio of 2,5-dipyridylpyrrole, 2,5-dipyridyl-3-methyl-4-acetylpyrrole or 2,5-dipyridyl-3-carboxymethyl-4-methylpyrrole to cis-dichlorotetrakis(dimethyl sulfoxide)ruthenium is 1:2 to 2:1.

4. The method for synthesizing the pyridine pyrrole ruthenium coordination complex according to claim 2, wherein a molar ratio of cis-dichlorotetrakis(dimethyl sulfoxide)ruthenium to bipyridine is 1:3 to 3:1.

5. The method for synthesizing the pyridine pyrrole ruthenium coordination complex according to claim 2, wherein the basic compound is at least one of calcium hydride, sodium hydride and triethylamine.

6. The method for synthesizing the pyridine pyrrole ruthenium coordination complex according to claim 2, wherein in step (1), the reaction is performed at a temperature of 50-115 °C for a period of 8-12 h.

7. The method for synthesizing the pyridine pyrrole ruthenium coordination complex according to claim 2, wherein in step (2), the reflux reaction is performed at a temperature of 50-115 °C for a period of 2-6 d.

8. The method for synthesizing the pyridine pyrrole ruthenium coordination complex according to claim 2, wherein the ammonia-containing gas has an ammonia concentration of greater than 1%.

9. Use of the pyridine pyrrole ruthenium coordination complex according to claim 1 as a catalyst for electrocatalyzing ammonia oxidation to prepare $N_2H_4$ and co-produce $H_2$.

10. Use of the pyridine pyrrole ruthenium coordination complex according to claim 1 as a catalyst for electrocatalyzing ammonia oxidation to prepare $N_2H_4$ and co-produce $H_2$, wherein organic solvents selected are anhydrous tetrahydrofuran and anhydrous acetonitrile.

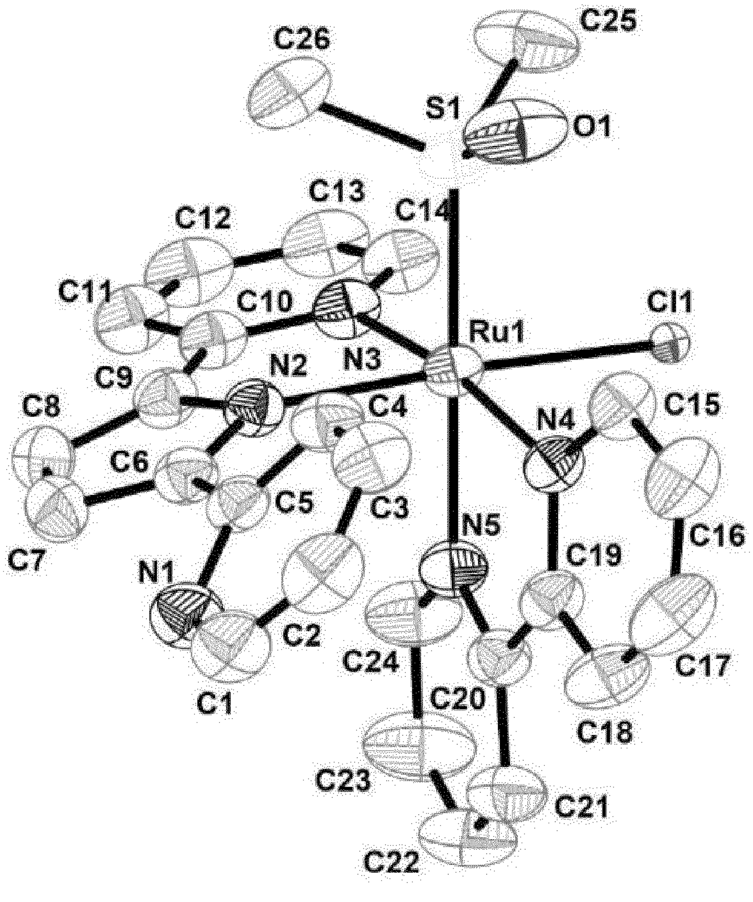

FIG. 1

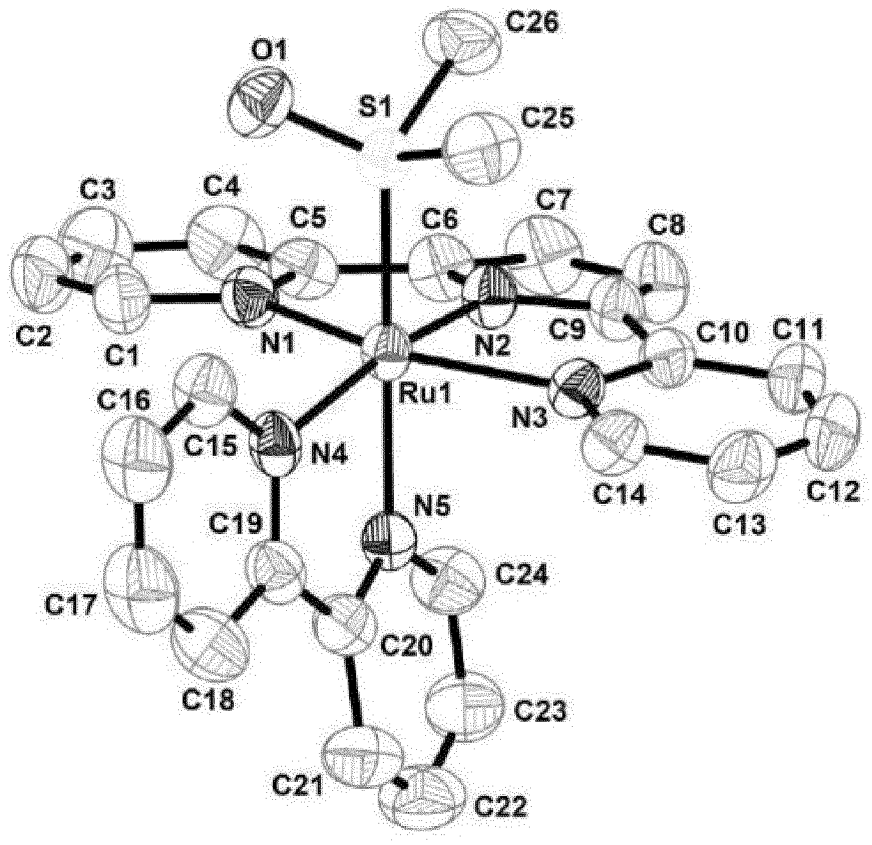

FIG. 2

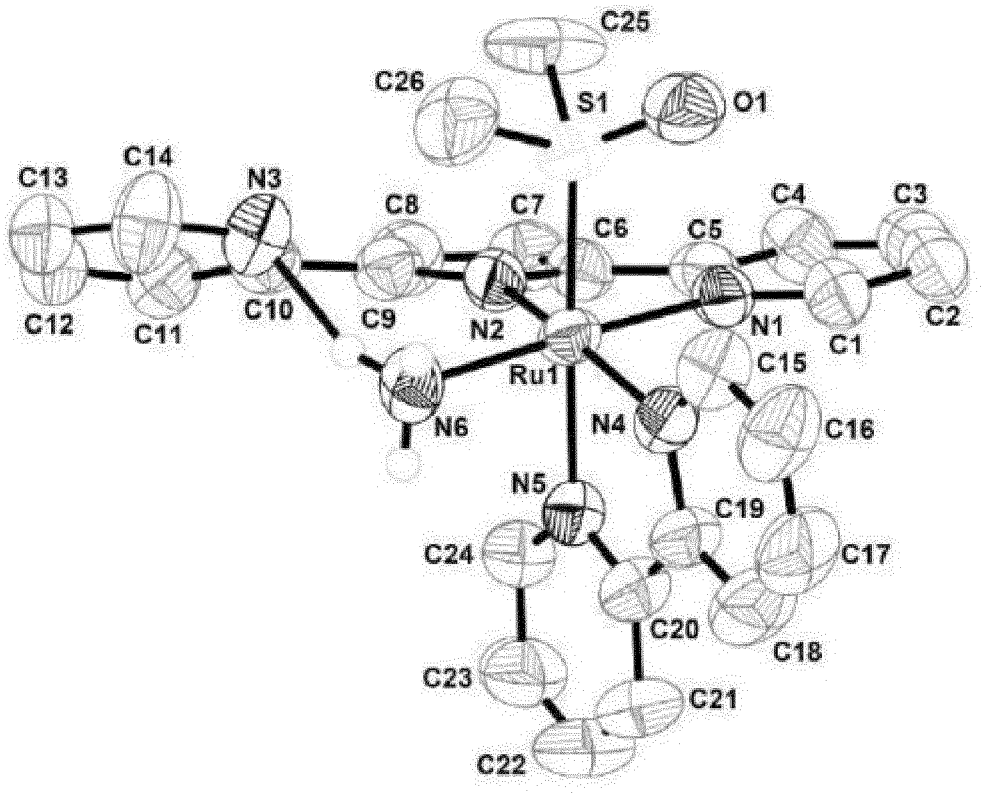

FIG. 3

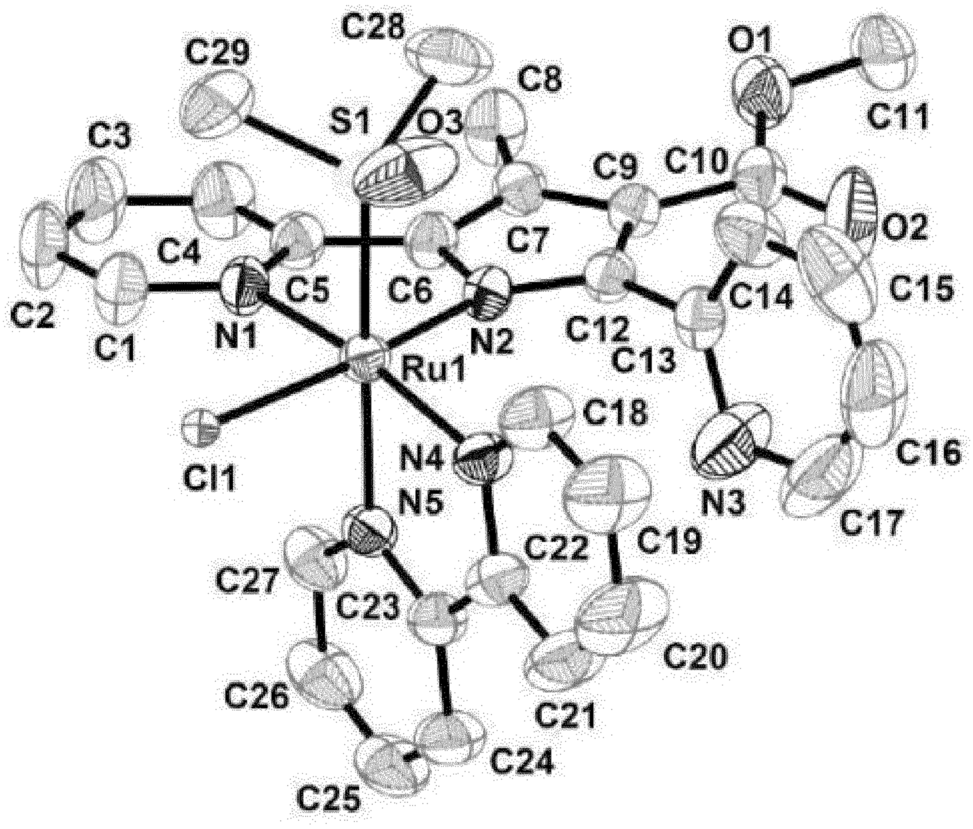

FIG. 4

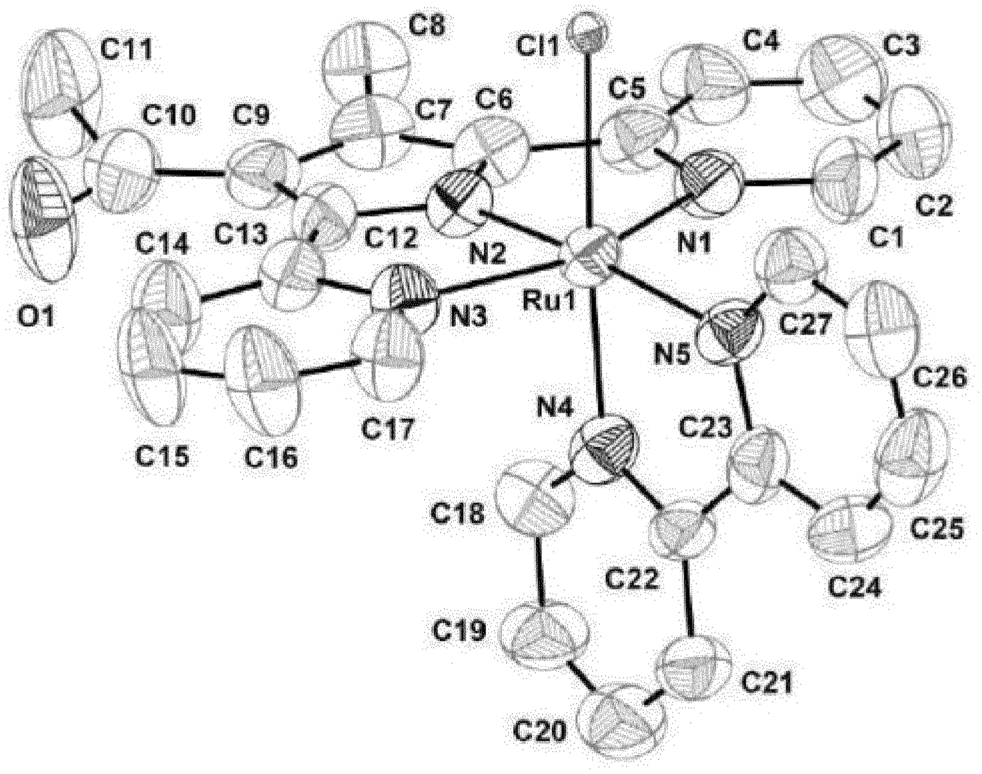

FIG. 5

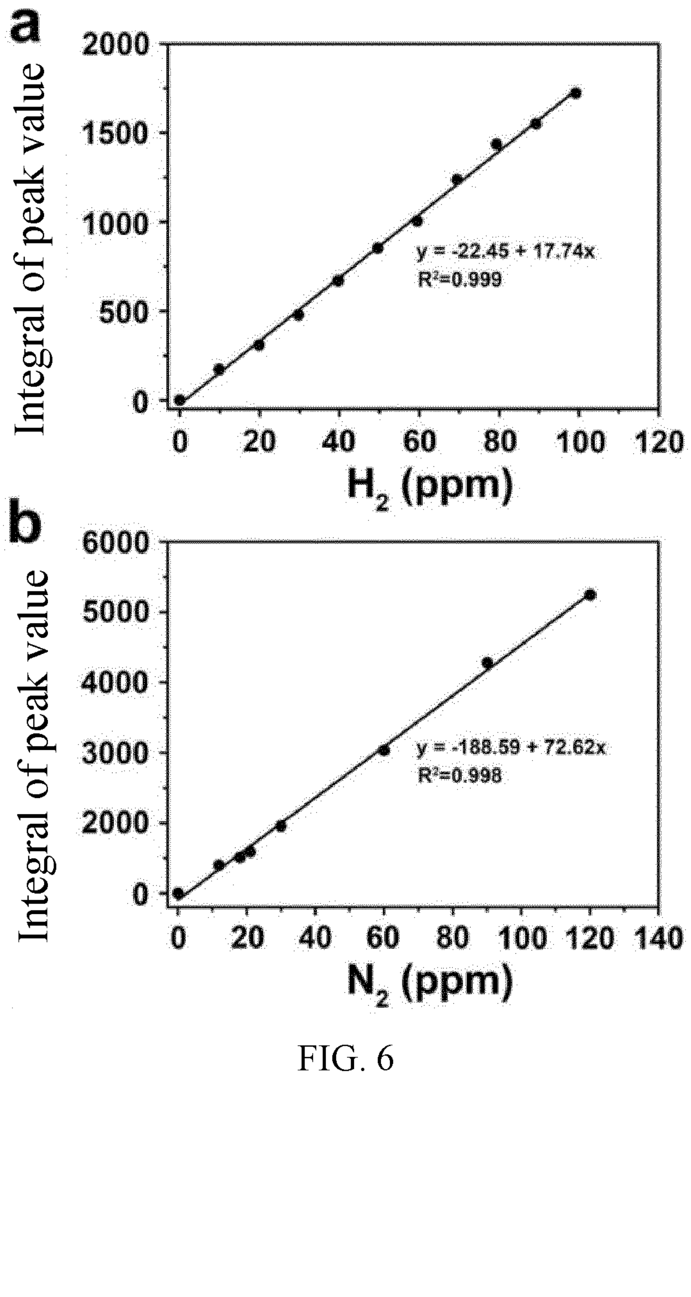
a
Integral of peak value
2000
1500
1000
500
0
0 20 40 60 80 100 120
H2 (ppm)
y = -22.45 + 17.74x
R²=0.999
b
Integral of peak value
6000
5000
4000
3000
2000
1000
0
0 20 40 60 80 100 120 140
N2 (ppm)
y = -188.59 + 72.62x
R²=0.998

FIG. 6

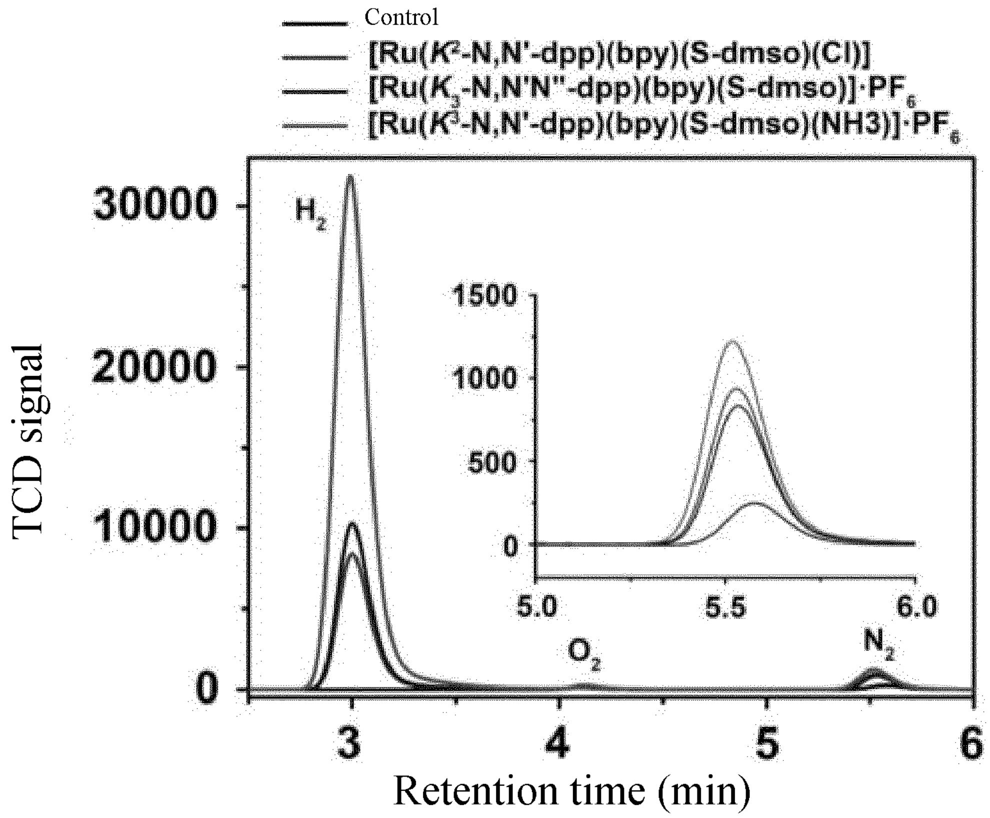
Control
[Ru(K²-N,N'-dpp)(bpy)(S-dmso)(Cl)]
[Ru(K3-N,N'N"-dpp)(bpy)(S-dmso)]·PF6
[Ru(K³-N,N'-dpp)(bpy)(S-dmso)(NH3)]·PF6
TCD signal
30000
20000
10000
0
H2
O2
N2
1500
1000
500
0
5.0
5.5
6.0
3
4
5
6
Retention time (min)

FIG. 7

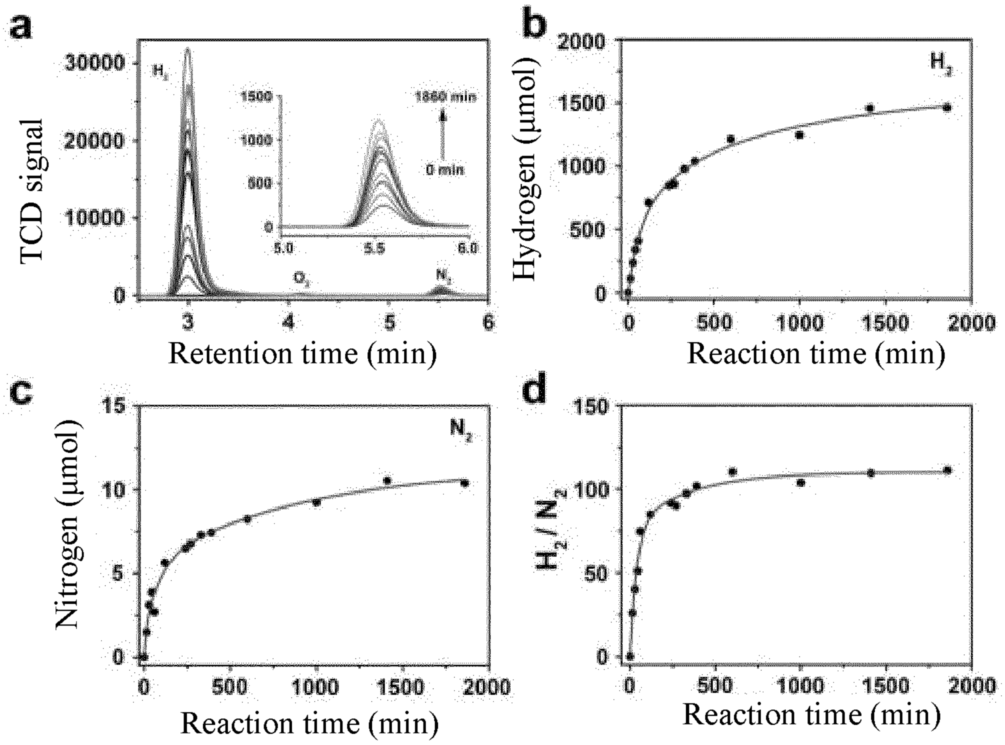
a
TCD signal
30000
20000
10000
0
H2
1500
1000
500
0
5.0
5.5
6.0
1860 min
0 min
O2
N2
3
4
5
6
Retention time (min)
b
Hydrogen (μmol)
2000
1500
1000
500
0
H2
0
500
1000
1500
2000
Reaction time (min)
c
Nitrogen (μmol)
15
10
5
0
N2
0
500
1000
1500
2000
Reaction time (min)
d
H2 / N2
150
100
50
0
0
500
1000
1500
2000
Reaction time (min)

FIG. 8

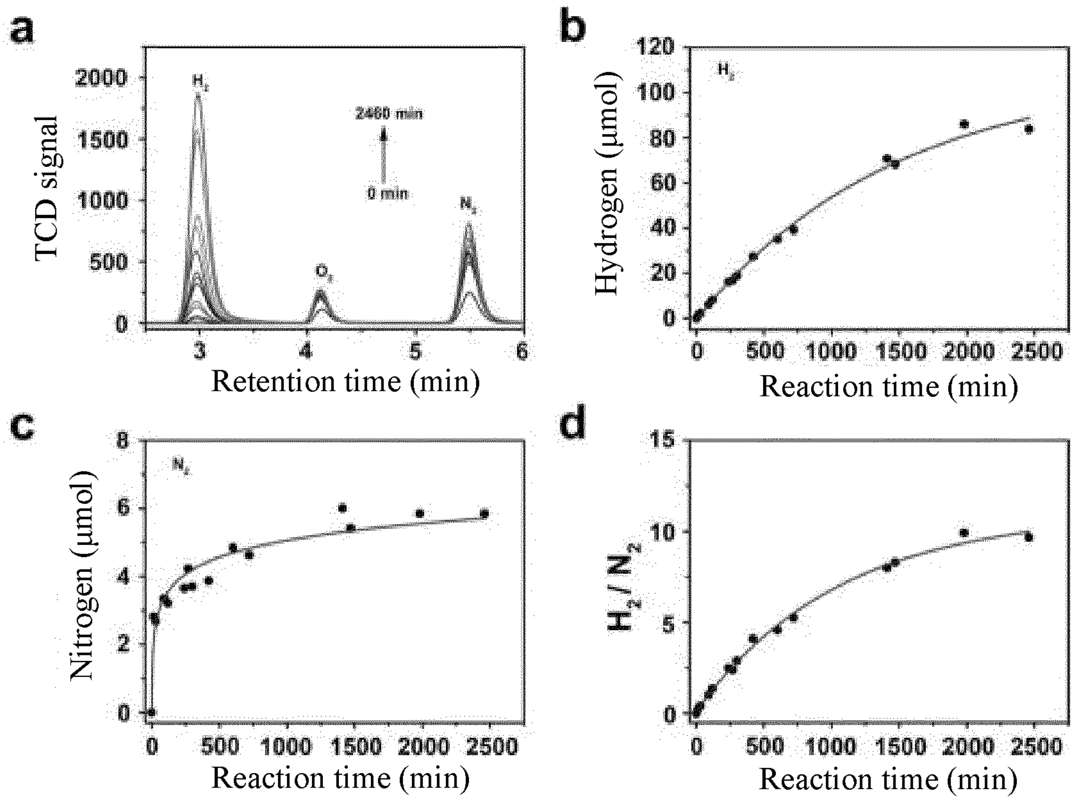
a
TCD signal
Retention time (min)
H2
O2
N2
2460 min
0 min
b
Hydrogen (μmol)
Reaction time (min)
H2
c
Nitrogen (μmol)
Reaction time (min)
N2
d
H2 / N2
Reaction time (min)

FIG. 9

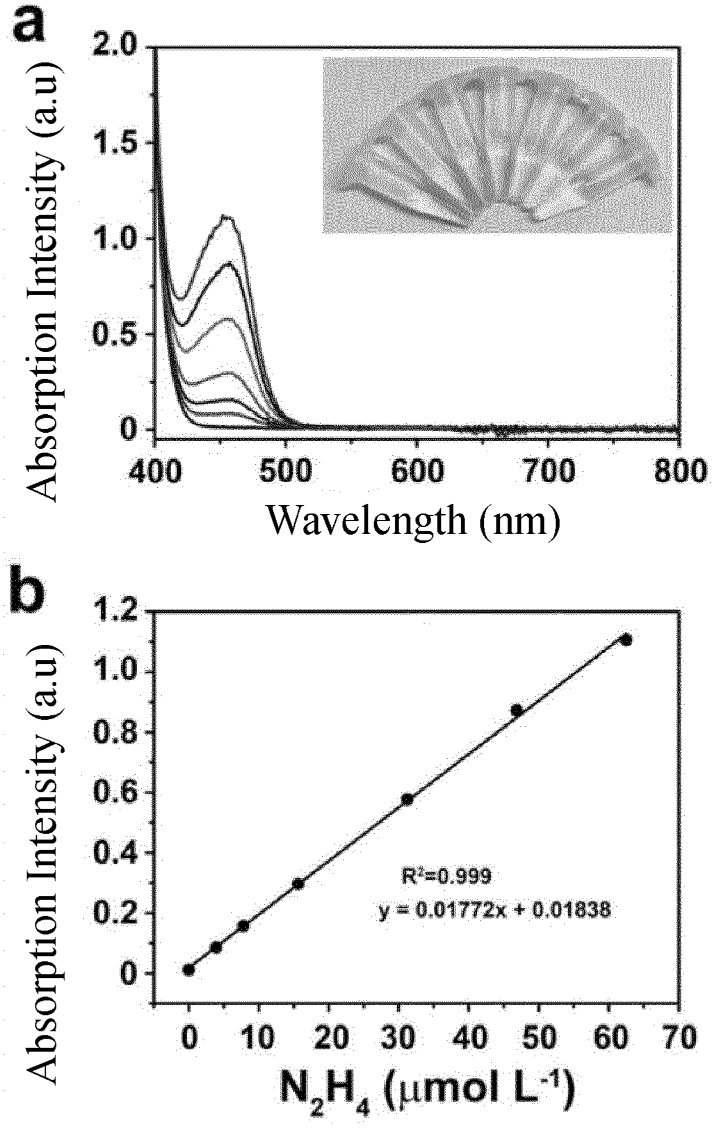
a
2.0
1.5
1.0
0.5
0
Absorption Intensity (a.u)
400
500
600
700
800
Wavelength (nm)
b
1.2
1.0
0.8
0.6
0.4
0.2
0
Absorption Intensity (a.u)
R²=0.999
y = 0.01772x + 0.01838
0
10
20
30
40
50
60
70
N2H4 (μmol L-1)

FIG. 10

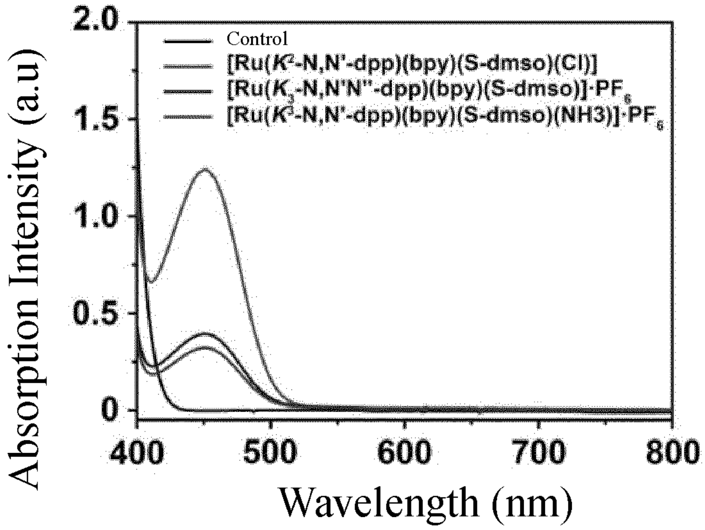
2.0
1.5
1.0
0.5
0
400
500
600
700
800
Absorption Intensity (a.u)
Wavelength (nm)
Control
[Ru(K2-N,N'-dpp)(bpy)(S-dmso)(Cl)]
[Ru(K3-N,N'N''-dpp)(bpy)(S-dmso)]·PF6
[Ru(K2-N,N'-dpp)(bpy)(S-dmso)(NH3)]·PF6

FIG. 11

**INTERNATIONAL SEARCH REPORT**

International application No.
**PCT/CN2022/139184**

**A. CLASSIFICATION OF SUBJECT MATTER**

C07F15/00(2006.01)i

According to International Patent Classification (IPC) or to both national classification and IPC

**B. FIELDS SEARCHED**

Minimum documentation searched (classification system followed by classification symbols)

IPC:C07F

Documentation searched other than minimum documentation to the extent that such documents are included in the fields searched

Electronic data base consulted during the international search (name of data base and, where practicable, search terms used)

CNKI, CNPAT, CNTXT, WPI, STN-REGISTRY, STN-MARPAT, STN-CAPLUS: 中南大学, 易小艺, 陈果, 氨, 氧化, 肼, 吡咯, 吡啶, 钌, ammonia, ammo+, oxida+, hydrazine, pyrrol+, pyrid+, ruthenium, structural formula search

**C. DOCUMENTS CONSIDERED TO BE RELEVANT**

| Category* | Citation of document, with indication, where appropriate, of the relevant passages | Relevant to claim No. |
|---|---|---|
| PX | CN 114478648 A (CENTRAL SOUTH UNIVERSITY) 13 May 2022 (2022-05-13)<br>claims 1-8, and description, paragraph [0030] | 1-10 |
| A | CN 108997435 A (CENTRAL SOUTH UNIVERSITY) 14 December 2018 (2018-12-14)<br>description, paragraphs [0004]-[0011] | 1-10 |
| A | MCSKIMMING A. et al. "An Easy One-Pot Synthesis of Diverse 2,5-Di(2-pyridyl)pyrroles: A Versatile Entry Point to Metal Complexes of Functionalised, Meridial and Tridentate 2,5-Di(2-pyridyl)pyrrolato Ligands"<br>*Chem. Eur. J.,* Vol. 20, 23 July 2014 (2014-07-23),<br>pp. 11445-11456 | 1-10 |
| A | 甘志良等 (GAN, Zhiliang et al.). "双吡啶单吡咯钌配合物与DNA的相互作用 (DNA Interaction Properties of Ruthenium Complexes Containing Bispyridylpyrrole Ligand)"<br>*华中师范大学学报 (自然科学版) (Journal of HuaZhong Normal University (Natural Sciences)),* Vol. 53, No. 3, 30 June 2019 (2019-06-30),<br>pp. 365-372 | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 February 2023** | **15 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2022/139184**

| Patent document cited in search report | | | Publication date (day/month/year) | Patent family member(s) | Publication date (day/month/year) |
|---|---|---|---|---|---|
| CN | 114478648 | A | 13 May 2022 | None | |
| CN | 108997435 | A | 14 December 2018 | None | |

Form PCT/ISA/210 (patent family annex) (July 2022)